## Europäisches Patentamt
## European Patent Office
## Office européen des brevets

(11) Veröffentlichungsnummer: **0 387 649 B1**

# EUROPÄISCHE PATENTSCHRIFT

(45) Veröffentlichungstag der Patentschrift: **14.09.94**

(51) Int. Cl.5: **A23G 1/00**, A23G 1/04, A23L 1/221

(21) Anmeldenummer: **90104173.1**

(22) Anmeldetag: **03.03.90**

(54) **Verfahren zur Herstellung eines löslichen Kakaoerzeugnisses.**

(30) Priorität: **16.03.89 DE 3908649**

(43) Veröffentlichungstag der Anmeldung:
**19.09.90 Patentblatt 90/38**

(45) Bekanntmachung des Hinweises auf die
Patenterteilung:
**14.09.94 Patentblatt 94/37**

(84) Benannte Vertragsstaaten:
**AT BE CH DE DK ES FR GB GR IT LI LU NL SE**

(56) Entgegenhaltungen:
**EP-A- 0 118 901**     **DE-A- 2 055 030**
**DE-A- 3 131 530**     **FR-A- 2 114 637**
**GB-A- 693 666**      **US-A- 2 512 663**

(73) Patentinhaber: **Kraft Jacobs Suchard SA**
**Klausstrasse 4-6**
**CH-8008 Zürich (CH)**

(72) Erfinder: **Vogt, Siegfried**
**Gaussstrasse 30**
**D-2804 Lilienthal (DE)**
Erfinder: **Krempel, Wolfgang**
**Max-Jahn-Weg 8**
**D-2800 Bremen (DE)**
Erfinder: **Assenmacher, Ute**
**Linienstrasse 4**
**D-2800 Bremen (DE)**

(74) Vertreter: **Bolte, Erich, Dipl.-Ing. et al**
**c/o Meissner, Bolte & Partner**
**Patentanwälte**
**Hollerallee 73**
**D-28209 Bremen (DE)**

**Beschreibung**

Die vorliegende Anmeldung betrifft ein Verfahren zur Herstellung eines löslichen Kakaoerzeugnisses mit verbesserten Eigenschaften.

Die bekannten Verfahren zur Herstellung von löslichen Kakaoerzeugnissen wie z.B. Instant-Pulver für die Herstellung von Getränken mit Kakaogeschmack sind bislang unbefriedigend. Die entsprechend hergestellten Produkte zeigen in ihren organoleptischen Eigenschaften und in ihrer Konsistenz Nachteile: Beispielsweise ergeben sie als Getränk instabile Lösungen, bei denen sich ungelöste Teilchen absetzen und enthaltenes Fett an der Oberfläche schwimmt. Außerdem liefern die bekannten Verfahren meist unzulängliche Ausbeuten. Meist erfolgt die Herstellung löslicher Kakaoerzeugnisse durch Extraktion von Kakaomaterial wie Kakaonibs, Kakaopulver.

In US-PS 3,615,659 ist ein Verfahren zur Herstellung eines Getränks mit Schokoladengeschmack beschrieben, das folgende Verfahrensstufen umfaßt:

- Kakao wird bei einer Temperatur von unter 180°C mit Wasser extrahiert;
- der Extrakt auf eine Temperatur zwischen 110°C bis 130°C erhitzt;
- anschließend auf 20°C bis 5°C abgekühlt, um unlösliche Substanzen auszufällen
- Abtrennung unlöslicher Substanzen und Sterilisieren des Getränks.

Bei diesem Verfahren ist vorgesehen, ein Stärke-abbauendes Enzym dem Kakao-Wasser-Gemisch beizugeben, um die Ausbeute zu erhöhen.

Die Nachteile des Verfahrens nach US-PS 3,615,659 sind in erster Linie darin zu sehen, daß der Fettgehalt des Ausgangsmaterials aufgrund seines Löslichkeitsverhaltens eine befriedigende Extraktion der löslichen Kakaobestandteile verhindert, die Konsistenz des Produkts damit negativ beeinflußt.

Hier will die vorliegende Erfindung Abhilfe schaffen. Ihre Aufgabe besteht darin, ein Verfahren zur Herstellung eines löslichen Kakaoerzeugnisses mit verbesserten organoleptischen und/oder anwendungsrelevanten Eigenschaften auf der Grundlage einer Extraktion von Kakaopulver mit Wasser und anschließender Konzentrierung des Extrakts, bereitzustellen.

Zur Lösung dieser Aufgabe ist das erfindungsgemäße Verfahren dadurch gekennzeichnet, daß das Kakaopulver vor der Extraktion mit Wasser einer Extraktion mit Alkohol, insbesondere Ethanol, unterzogen und der Rückstand als Ausgangsprodukt für die Wasserextraktion verwendet wird. Durch die Extraktion mit Alkohol wird dem Kakaopulver in erster Linie Fett entzogen. Außerdem geht ein geringer Anteil des im Kakaopulver enthaltenen Theobromins zusammen mit geringen Mengen an nicht identifizierten Kakaoinhaltsstoffen in die Alkoholphase über.

In Abhängigkeit vom Alkoholtyp, Extraktonszeit und Temperatur kann die Extraktion von Fett und Theobromin in gewissen Grenzen variiert werden. Als besonders vorteilhaft erwies sich die Verwendung von Ethanol zur Extraktion, die Anwendung erhöhter Temperaturen sowie die Durchführung der Extraktion mit Alkohol in zwei aufeinanderfolgenden Stufen. Die Behandlung mit Alkohol erfolgt vorzugsweise im Temperaturbereich von 60°C bis 80°C. Auf diesem Weg wird das Fett praktisch vollständig aus dem Kakaopulver entfernt.

Der in Alkohol unlösliche Rückstand wird von Alkoholresten befreit. Vorzugsweise geschieht dies durch Trocknen. Anschließend wird der Rückstand der Extraktion mit Wasser unterzogen. Hierbei ist eine Temperatur von ca. 90°C bevorzugt.

Weitere verfahrenstechnische Merkmale dieser Extraktion sind in den Unteransprüchen beschrieben. Auch bei der Extraktion mit Wasser hat sich die Durchführung zweier Extraktionsstufen als besonders vorteilhaft erwiesen, da dadurch der Anteil der extrahierten Kakaobestandteile ansteigt.

Besondere Bedeutung kommt in der Praxis den Merkmalen gemäß Anspruch 7 und Anspruch 8 zu. Danach wird der Rückstand der Alkoholextraktion zunächst einer enzymatischen Behandlung unterworfen. Vorzugsweise werden Stärke-abbauende Enzyme, beispielsweise Amyloglucosidase eingesetzt. Stärke wird dabei in wasserlösliche Abbauprodukte gespalten. Diese gehen bei der anschließenden Extraktion mit Wasser in den Wasserextrakt über, so daß dieser einen - im Vergleich zu einem Wasserextrakt von nichtenzymatisch behandeltem Kakaopulver - erhöhten Anteil an wasserlöslichen Inhaltsstoffen aufweist.

Der erfindungsgemäß hergestellte wäßrige Extrakt aus Kakaopulver wird nach Reinigung und Konzentrierung als wasserlöslicher Grundstoff zur Herstellung von Getränken, Süßwaren usw. in flüssiger Form oder nach Trocknung auch in Pulverform verwendet.

Die Reinigung des wäßrigen Extraktes von ungelösten Bestandteilen wird vorzugsweise in einem Separator durchgeführt. Zur Konzentrierung eignet sich die Verdampfung von Wasser in Vakuum; die Trocknung des Konzentrats zur Herstellung von Pulver kann beispielsweise durch Gefriertrocknung erfolgen.

Der bei der Wasser-Extraktion anfallende feste Rückstand besteht hauptsächlich aus Cellulose, und zwar mit einem Wassergehalt von 60 %. Daneben enthält er unlösliche Kakaobestandteile. Dieser cellulosereiche Rückstand wird getrocknet und kann als faserreiches Material der Herstellung ballaststoffreicher Kakao- und Schokoladeprodukten zugeführt werden.

Die Vorteile des erfindungsgemäßen Verfahrens gegenüber dem Stand der Technik sind daran zu sehen, daß die Herstellung eines wasserlöslichen Kakaoerzeugnisses aus Kakaopulver in hoher Ausbeute ermöglicht wird, wobei das hergestellte Kakaoerzeugnis ausgezeichnete organoleptische und anwendungsrelevante Eigenschaften aufweist.

Figur 1 zeigt eine schematische Darstellung des erfindungsgemäßen Verfahrens.

Fig. 1

KAKAO-EXTRAKTION

3

Danach wird zunächst das Ausgangsmaterial Kakaopulver, vorzugsweise stark entöltes Kakaopulver mit einem Fettgehalt von 10 bis 12 % und einer Korngröße von 15 bis 30 μm, mit Alkohol, insbesondere Ethanol, vermischt. Die Temperatur des Gemisches wird auf 60°C bis 80°C, insbesondere 70°C, gehalten. Gute Ergebnisse werden erzielt, wenn diese Mischung ca. 30 min bei der erhöhten Temperatur gerührt wird. Anschließend wird die überstehende alkoholische Phase in einem Dekanter abgetrennt. Die Wirksamkeit der Extraktion läßt sich erhöhen, wenn der Rückstand der Alkoholextraktion einer zweiten Extraktion mit Alkohol unterworfen wird. Der danach anfallende Rückstand wird von Alkoholrückständen befreit. Dies geschieht durch Trocknen des Rückstandes, gegebenenfalls im Vakuum. Der bzw. die Alkoholextrakte werden zur Gewinnung von Alkohol, Theobromin und/oder Fett weiterverarbeitet. Durch Destillation läßt sich der Alkohol wiedergewinnen und für weitere Extraktionen verwenden. An die Trocknung des von Alkohol befreiten Rückstandes kann sich eine enzymatische Aufbereitung des Rückstandes anschließen, wodurch sich die Effizienz der darauffolgenden Wasserextraktion steigern läßt. Die Enzymbehandlung wird vorzugsweise mit dem Enzymamyloglucosidase unter Einhaltung enzymspezifischer Bedingungen (wäßrige Lösung, Temperatur ca. 70°C) durchgeführt. Zur Beendigung der Enzymbehandlung wird das Gemisch kurzzeitig (ca. 3 min) auf etwa 90°C erhitzt. Das Enzym ist damit desaktiviert.

Die eigentliche Wasserextraktion wird entweder mit dem enzymatisch aufgeschlossenen Rückstand aus der Alkoholextraktion oder direkt mit dem von Alkohol befreiten Rückstand der Alkoholextraktion durchgeführt. Dazu wird der trockene Rückstand im Verhältnis 1 : 4 mit Wasser vermischt und die Mischung während eines Zeitraums von 30 min bis 3 h unter Rühren auf 90°C aufgeheizt. Da der enzymatisch aufgeschlossene Rückstand bereits in wäßriger Aufschlämmung vorliegt, wird hier die Mischung lediglich auf das Verhältnis Wasser zu Feststoffen (trockener Rückstand) 4 : 1 eingestellt. Die Trennung der flüssigen und festen Bestandteile der wäßrigen Mischung erfolgt in einem Dekanter. Die gewonnene Flüssigkeit ist Kakaoextrakt. Als fester Rückstand verbleibt Cellulose mit einem Anteil von 60 % Wasser, im Gemisch mit weiteren größtenteils unlöslichen Kakao-Inhaltsstoffen. Zur Verbesserung des Verfahrens wird der Rückstand der Wasserextraktion erneut mit Wasser ausgezogen. Die Bedingungen entsprechen denen der ersten Extraktion mit Wasser. Die Trennung von Wasserextrakt und Rückstand erfolgt erneut mittels Dekanter. Der verbleibende Rückstand wird nach Trocknung einer Verwendung als Fasermaterial zugeführt. Die Wasserextrakte werden in einem Separator von festen Bestandteilen gereinigt und anschließend konzentriert, gegebenenfalls bis zur Trockne.

Im folgenden wird das beanspruchte Verfahren anhand eines Ausführungsbeispiels näher erläutert:

Beispiel

In einem Mischbehälter werden 50 kg Kakaopulver (10 bis 12 % Fett, Partikelgröße 15 bis 30 μm) und 200 l Ethanol bei einer Temperatur von 70°C 30 min gerührt. Dieses Gemisch wird dann über einen Dekanter geleitet, der die Trennung von flüssiger Phase und festem Rückstand (pastöse Masse) bewerkstelligt. Die flüssige alkoholische Phase enthält Ethanol, Fett, Theobromin und eine sehr geringe Menge weiterer nicht identifizierter Kakaobestandteile. Der pastöse Rückstand stellt Kakaopulver dar, das teilweise oder völlig entfettet und im Theobromingehalt reduziert ist. Es enthält noch Ethanolreste.

Die vorstehende Ethanolextraktion wird mit dem pastösen Rückstand wiederholt. Das Vermischen von Ethanol und Rückstand wird wieder bei 70°C durchgeführt. Die Mischzeit beträgt 20 bis 30 min. Danach erfolgt erneut in einem Dekanter die Trennung von flüssiger Phase und Rückstand.

Der pastöse Rückstand wird nun getrocknet, um Alkoholreste zu beseitigen. Dazu wird der Rückstand vorzugsweise in einem Trommeltrockner behandelt. So wird ein rieselfähiges Produkt erhalten. Die Beseitigung von Alkoholresten kann auch im weiteren Verlauf des Verfahrens vorgenommen werden. Bei der erfindungsgemäßen Herstellung eines Kakaoerzeugnisses in Pulverform lassen sich Alkoholreste beispielsweise bei der abschließenden Gefriertrocknung beseitigen.

Der nach der Alkoholextraktion anfallende pastöse oder getrocknete Rückstand wird der Wasserextraktion zugeführt. Dazu wird der Rückstand (71 kg) mit 275 l Wasser vermischt und für 30 min auf 90°C erhitzt. Das Verhältnis Wasser zu Rückstand beträgt 4 : 1. Die Trennung von wäßriger Phase und festem Rückstand wird in einem Dekanter durchgeführt. Die gewonnene Flüssigkeit ist Kakao-Extrakt. Der Rückstand wird einer erneuten Wasserextraktion unter den beschriebenen Bedingungen unterworfen. Der erhaltene 2. Wasserextrakt wird mit dem 1. Wasserextrakt vereinigt und zur Reinigung von festen Bestandteilen in einen Separator geleitet. Anschließend wird der Extrakt in einer Vakuumanlage aufkonzentriert. Das Konzentrat wird dann durch Gefriertrocknung in Pulverform (Wassergehalt ca 4 %) übergeführt. Die Ausbeute an erfindungsgemäß hergestelltem löslichen Kakaoerzeugnis beträgt 25 Gew.-%, bezogen auf das Ausgangsmaterial Kakaopulver.

In der nachstehenden Tabelle I sind die Zusammensetzungen des Ausgangsmaterials Kakaopulver, des mit Ethanol extrahierten Kakaopulvers und des Endprodukts, insbesondere hinsichtlich des Fett- und Theobromingehaltes, zu entnehmen.

**Tabelle I**

| Labor Nr. 03000 | % Fett i.Tr. | % Fett i.S. | T Theo i.T. | Theo.mg 100 g | % FS | pH | FW | $H_2O$ % | Coff. mg/100 |
|---|---|---|---|---|---|---|---|---|---|
| Kakaopulver (Ausgangsmaterial) | 10,70 | | 2,77 | | | 6,91 | 29,7 | 6,34 | |
| Rückstand nach 1. Ethanol-Extraktion | 5,02 | | 2,41 | | | | | 44,05 | |
| Rückstand nach 2. Ethanol-Extraktion | 1,47 | | 2,02 | | | | | 45,41 | |
| Endschlamm | | 0,14 | 1,00 | | 21,02 | 7,64 | | | |
| Ethanol Phase 1 | 75,96 | 3,41 | | 198 | 4,49 | | | | 32 |
| Ethanol Phase 2 | 62,46 | 0,93 | | 158 | 1,49 | | | | |
| Wäss. Extrakt n. Dek. | | 0,10 | | 177 | 4,37 | | | | |
| Fertig-Extr. n. Sep. | | 0,10 | 3,79 | 173 | 3,81 | | | | |
| Kakaoerzeugnis Pulver (Endprodukt) | 1,62 | | | | | 7,09 | 13,2 | 4,44 | |
| 2-fache Wasserextraktion | | | 0,26 | | 21,94 | | | | |

Die Tabelle zeigt deutlich die stufenweise Reduzierung von Fettgehalt und Theobromingehalt des Kakaopulvers bei der Behandlung mit Ethanol.

Die "vorgeschaltete" Entfettung des Kakaopulvers wirkt sich bei der anschließenden Extraktion mit Wasser positiv aus. Die wasserlöslichen Bestandteile sind nach der Entfettung dem Extraktionsmittel Wasser leichter zugänglich, entsprechend ist die Ausbeute der Extraktion höher. Der nach vorausgehender Entfettung gewonnene wäßrige Extrakt hat eine ausgezeichnete Konsistenz, da praktisch kein Fett an der Oberfläche schwimmt.

Die mit der Entfettung einhergehende Reduzierung des Theobromin-Gehalts im Kakaopulver führt zu einer geschmacklichen Verbesserung des Endprodukts. Theobromin ist aufgrund seines charakteristischen Geschmacks und seiner anregenden Wirkung in Kakaoerzeugnissen grundsätzlich erwünscht. In größerer Konzentration überwiegt allerdings die bittere Geschmackskomponente, was zu einer negativen Beeinträchtigung des entsprechenden Produkts führt. Dies ist bei der Konzentrierung eines Wasserextraktes von nicht entfettetem Kakaopulver der Fall. Theobromin ist gut wasserlöslich und geht in den Wasserextrakt über. Bei der Konzentrierung des Wasserextrakts kommt es - im Vergleich zu den meisten übrigen Kakao-Inhaltsstoffen - zu einer überproportionalen Steigerung des Gehalts an Theobromin, was geschmacklich unangenehm hervortritt.

Wie der Tabelle I zu entnehmen ist, ergab sich beim Einsatz von Kakaopulver (10,70 % Fett i. Tr.) mit einem Theobromin-Gehalt von 2,77 % in Tr. bei der 1. Extraktion mit Ethanol eine Reduzierung des Theobromingehalts auf 2,41 % und bei der 2. Extraktion auf 2,02 %. Im Endprodukt war Theobromin mit 3,79 % enthalten.

**Patentansprüche**

1. Verfahren zur Herstellung eines löslichen Kakaoerzeugnisses, bei dem Kakaopulver als Ausgangsmaterial mit Wasser extrahiert und der Extrakt konzentriert wird, **dadurch gekennzeichnet**, daß das Kakaopulver vor der Extraktion mit Wasser einer Extraktion mit Alkohol, insbesondere Ethanol, unterzogen und der Rückstand als Ausgangsprodukt für die Wasser-Extraktion verwendet wird.

2. Verfahren nach Anspruch 1, dadurch gekennzeichnet, daß die Extraktion des Kakaopulvers mit Alkohol bei einer Temperatur zwischen 60°C und 80°C, insbesondere bei etwa 70°C, erfolgt.

3. Verfahren nach Anspruch 1 oder 2, dadurch gekennzeichnet, daß das Kakaopulver in mindestens zwei aufeinanderfolgenden Stufen mit Alkohol extrahiert wird, wobei der Rückstand der vorangegangenen Extraktionsstufe einer weiteren Extraktion mit Alkohol unterworfen wird.

4. Verfahren nach einem oder mehreren der Ansprüche 1 bis 3, dadurch gekennzeichnet, daß der Rückstand der Alkoholextraktion zur Wasserextraktion mit Wasser im Verhältnis 1:4 vermischt wird, die Mischung bei erhöhter Temperatur gerührt wird und anschließend eine Trennung von wäßrigem Extrakt und Rückstand durchgeführt wird.

5. Verfahren nach einem oder mehreren der vorangehenden Ansprüche, dadurch gekennzeichnet, daß der Rückstand der Alkoholextraktion bei erhöhter Temperatur im Bereich von etwa 60°C bis 95°C, insbesondere bei 90°C, mit Wasser extrahiert wird.

6. Verfahren nach einem oder mehreren der vorangehenden Ansprüche, dadurch gekennzeichnet, daß der Rückstand der Wasser-Extraktion einer zweiten Wasser-Ektraktion unterworfen wird.

7. Verfahren nach einem oder mehreren der vorangehenden Ansprüche, dadurch gekennzeichnet, daß der Rückstand der Alkoholextraktion vor der Extraktion mit Wasser einer enzymatischen Behandlung unterworfen wird.

8. Verfahren nach Anspruch 7, dadurch gekennzeichnet, daß zur enzymatischen Behandlung ein stärkeabbauendes Enzym, beispielsweise Amyloglucosidase, verwendet wird.

9. Verfahren nach einem oder mehreren der vorangehenden Ansprüche, dadurch gekennzeichnet, daß aus dem Wasserextrakt durch Separation ungelöste Teilchen entfernt werden, und daß der gereinigte Extrakt anschließend bis zur Trockne konzentriert wird.

10. Verfahren nach einem oder mehreren der Ansprüche 1 bis 9, dadurch gekennzeichnet, daß als Ausgangsmaterial stark entöltes Kakaopulver der Fettgehaltsstufe 10 bis 12 % eingesetzt wird.

11. Verwendung des löslichen Kakaoerzeugnisses, insbesondere hergestellt nach einem oder mehreren der Ansprüche 1 bis 10, zur Herstellung von Getränken, Süßwaren und Backwaren.

## Claims

1. Process for producing a soluble cocoa product in which cocoa powder as starting material is extracted With water and the extract is concentrated, characterized in that before the extraction with water, said cocoa powder is subjected to an extraction with alcohol, in particular with ethanol, and the residue is taken as initial product for the water extraction.

2. Process according to Claim 1, characterized in that the extraction of the cocoa powder with alcohol is performed at a temperature between 60°C and 80°C, in particular at about 70°C.

3. Process according to Claim 1 or 2, characterized in that the cocoa powder is extracted with alcohol in at least two successive steps in which the residue of the preceding extraction step is subjected to a further extraction with alcohol.

4. Process according to one or more of Claims 1 to 3, characterized in that for the water extraction the residue of the alcohol extraction is mixed with water in a ratio of 1:4, the mixture is stirred at elevated temperature and subsequently aqueous extract and residue are separated.

5. Process according to one or more of the preceding claims, characterized in that the residue of the alcohol extraction is extracted with water at elevated temperature in the range from about 60°C to 95°C, in particular at 90°C.

6. Process according to one or more of the preceding claims, characterized in that the residue of the water extraction is subjected to a second water extraction.

7. Process according to one or more of the preceding claims, characterized in that, prior to extraction with water, the residue of the alcohol extraction is subjected to an enzymatic treatment.

8. Process according to Claim 7, characterized in that a starch-degrading enzyme such as amyloglucosidase is used for the enzymatic treatment.

9. Process according to one or more of the preceding claims, characterized in that undissolved particles are removed from the water extract by means of separation and in that the purified extract is subsequently concentrated to dryness.

10. Process according to one or more of Claims 1 to 9, characterized in that highly deoiled cocoa powder with a fat content of 10 to 12% is used as starting material.

11. Use of the soluble cocoa product, in particular produced according to one or more of Claims 1 to 10, for producing beverages, confectionery and baked goods.

## Revendications

1. Procédé de fabrication d'un produit soluble à base de cacao, dans lequel de la poudre de cacao, en tant que matière de départ, est extraite par de l'eau et dans lequel l'extrait est concentré, caractérisé en ce que la poudre de cacao est soumise avant l'extraction à l'eau à une extraction à l'alcool, en particulier de l'éthanol, et en ce que le résidu est utilisé comme produit de départ pour l'extraction à l'eau.

2. Procédé suivant la revendication 1, caractérisé en ce que l'extraction à l'alcool de la poudre de cacao a lieu à une température entre 60°C et 80°C, en particulier approximativement à 70°C.

3. Procédé suivant la revendication 1 ou 2, caractérisé en ce que la poudre de cacao est extraite à l'alcool dans au moins deux étapes successives, le résidu de l'étape d'extraction qui a précédé étant soumis à une autre extraction à l'alcool.

4. Procédé suivant l'une ou plusieurs des revendications 1 à 3, caractérisé en ce que le résidu de l'extraction à l'alcool est mélangé à de l'eau dans un rapport 1/4 pour l'extraction à l'eau, en ce que le mélange est agité à une température accrue et en ce que finalement est effectuée une séparation de l'extrait aqueux et du résidu.

5. Procédé suivant l'une ou plusieurs des revendications précédentes, caractérisé en ce que le résidu de l'extraction à l'alcool est extrait à l'eau, à une température accrue dans la zone d'approximativement 60°C à 95°C, en particulier à 90°C.

6. Procédé suivant l'une ou plusieurs des revendications précédentes, caractérisé en ce que le résidu de l'extraction à l'eau est soumis à une seconde extraction à l'eau.

7. Procédé suivant l'une ou plusieurs des revendications précédentes, caractérisé en ce que le résidu de l'extraction à l'alcool est soumis avant l'extraction à l'eau à un traitement enzymatique.

8. Procédé suivant la revendication 7, caractérisé en ce qu'une enzyme qui se dégrade fortement, par exemple une amyloglucosidase, est utilisée pour le traitement enzymatique.

9. Procédé suivant l'une ou plusieurs des revendications précédentes, caractérisé en ce que des particules non dissoutes sont supprimées de l'extrait aqueux par séparation et en ce que l'extrait épuré est finalement concentré jusqu'à être sec.

10. Procédé suivant l'une ou plusieurs des revendications 1 à 9, caractérisé en ce qu'il est mis en oeuvre, comme matière de départ, de la poudre de cacao fortement débarrassée d'huile, du niveau de teneur en matière grasse de 10 à 12 %.

11. Utilisation du produit soluble à base de cacao, en particulier fabriqué suivant une ou plusieurs des revendications 1 à 10, pour la fabrication de boissons, de confiseries et de biscuits et pâtisseries.